# EUROPEAN PATENT APPLICATION

(11) **EP 1 802 128 A2**
(43) Date of publication of application: **27.06.2007**
(21) Application number: 06124401.8
(22) Date of filing: 20.11.2006
(51) Int. Cl.: H04N 7/50

(54) **Image processing apparatus, control method, and program**

(30) Priority: 21.12.2005 JP 2005368103
(71) Applicant: KABUSHIKI KAISHA TOSHIBA, Tokyo 105-8001 (JP)
(72) Inventor: Uchida, Kosuke, Tokyo 105-8001 (JP); Kitada, Noriaki, Tokyo 105-8001 (JP); Hoshina, Satoshi, Tokyo 105-8001 (JP)
(74) Representative: Henkel, Feiler & Hänzel

(57) **Abstract**

According to one embodiment, an information processing apparatus which decodes a compression encoded moving image stream, includes a filter processing unit (213) which executes a deblocking filter process in order to reduce block distortion for each decoded picture, a detection unit (211) which detects a load state of the information processing apparatus, and a control unit (212) which causes the filter processing unit to execute the deblocking filter process without a process for a color difference signal in accordance with the load state detected by the detection unit.

## Description

One embodiment of the invention relates to a moving image stream decoding technique suitable for an information processing apparatus such as a personal computer.

Recently, a personal computer including an audio video (AV) function equivalent to an AV apparatus such as a digital versatile disc (DVD) player or television apparatus has become popular. Such personal computer uses a software decoder which decodes a compression encoded moving image stream by software. By using this software decoder, a processor (CPU) can decode the compression encoded moving image stream without any dedicated hardware.

Recently, the H.264/AVC (Advanced Video Coding) standard is attracting attention as a next-generation moving image compression-encoding technique. The H.264/AVC standard is a compression-encoding technique which is more efficient than a conventional compression encoding technique such as MPEG2 or MPEG4. Hence, a processing amount larger than that of the conventional compression encoding technique such as MPEG2 or MPEG4 is required to execute each of the encoding and decoding processes compatible to the H.264/AVC standard.

Therefore, when the system load of a personal computer designed to decode, by software, a moving image stream compression-encoded by the H.264/AVC standard increases, a decoding process delay may occur, thereby preventing smooth reproduction of the moving image.

On the other hand, various processes have been proposed to smoothly decode a moving image stream. These processes include, for example, a process of partially omitting moving image data as long as a user can view the moving image without any problem (for example, see Jpn. Pat. Appln. KOKAI Publication No. 2003-179933).

Jpn. Pat. Appln. KOKAI Publication No. 2003-179933 discloses a technique which is related to a deblocking filter process for reducing block noise at the block boundary of a decoded image, and omits a process for a frame image of low priority when the operating rate of the CPU is high.

It is well known that in an image obtained upon omitting the deblocking filter process, a viewer easily perceives degradation of a luminance signal but hardly perceives degradation of a color difference signal. That is, it is preferable to skip only the deblocking filter process for a color difference signal and not the entire deblocking filter process, as a countermeasure against a high operating rate of the CPU.

The present invention has been made in consideration of the above situation, and has as its object to provide an information processing apparatus, control method, and program capable of appropriately reducing a system load in order to decode a moving image stream.

In order to achieve the above object, according to the present invention, an information processing apparatus which decodes a compression encoded moving image stream, includes a filter processing means for executing a deblocking filter process in order to reduce block distortion for each decoded picture, detection means for detecting a load state of the information processing apparatus, and control means for causing the filter processing means to execute the deblocking filter process without a process for a color difference signal in accordance with the load state detected by the detection means.

The present invention can provide an information processing apparatus, control method, and program capable of appropriately reducing a system load in order to decode a moving image stream.

The invention can be more fully understood from the following detailed description when taken in conjunction with the accompanying drawings, in which:
FIG. 1 is an exemplary perspective view showing the outer appearance of a computer according to the first embodiment of the present invention;
FIG. 2 is an exemplary block diagram showing the system configuration of the computer according to the first embodiment;
FIG. 3 is an exemplary block diagram showing the functional arrangement of a video reproduction application program used in the computer according to the first embodiment;
FIG. 4 is an exemplary block diagram showing the arrangement of a software decoder implemented by the video reproduction application program according to the first embodiment;
FIG. 5 is an exemplary flowchart showing the sequence of a decoding process executed by the video reproduction application program according to the first embodiment; and
FIG. 6 is an exemplary flowchart showing the sequence of a decoding process executed by a video reproduction application program according to the second embodiment.

Various embodiments according to the invention will be described hereinafter with reference to the accompanying drawings.

### (First Embodiment)

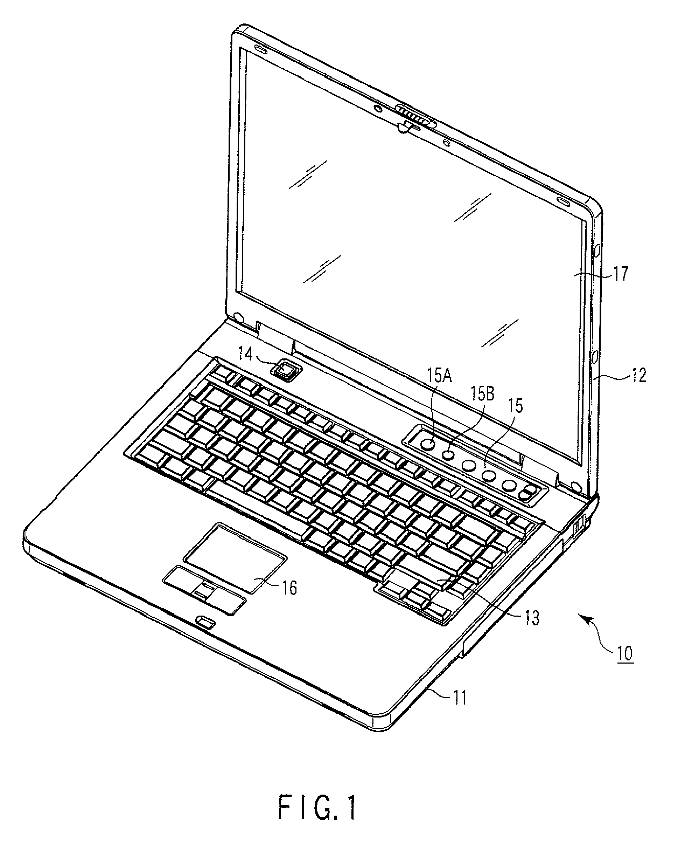

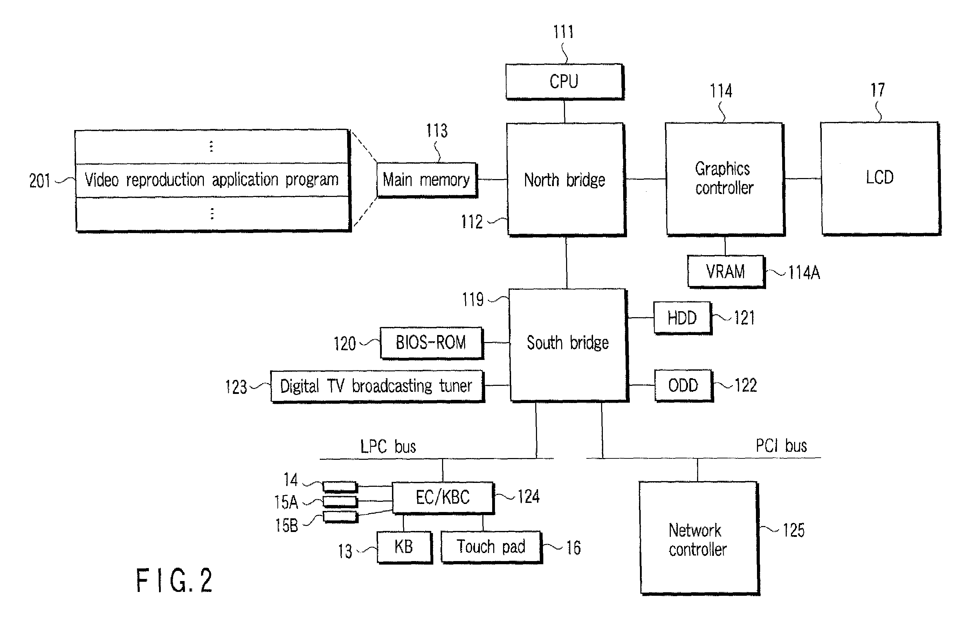

First, the arrangement of an information processing apparatus according to an embodiment of the present invention will be described with reference to FIGS. 1 and 2. For example, this information processing apparatus serves as a notebook type personal computer 10.

FIG. 1 is an exemplary perspective view when the display unit of the notebook type personal computer 10 is open. The computer 10 comprises a computer body 11 and display unit 12. The display unit 12 incorporates a display device formed from an liquid crystal display (LCD) 17, and the display screen of the LCD 17 is located at almost the center of the display unit 12.

The display unit 12 is attached to the computer body 11 so that the display unit 12 freely pivots between an open position and a closed position. The computer body 11 includes a low-profile, box-like housing, and its upper surface is equipped with a keyboard 13, a power button 14 for turning on/off the computer 10, an input operation panel 15, a touch pad 16, and the like.

The input operation panel 15 is an input device for inputting, to a system, an event corresponding to a pressed button, and comprises a plurality of buttons for activating a plurality of functions. These buttons include a TV start button 15A and digital versatile disc (DVD) start button 15B. The TV start button 15A is used to activate the TV function of reproducing and recording broadcast program data such as a digital TV broadcast program. When the user presses the TV start button 15A, a TV application program for executing the TV function is activated. The DVD start button 15B is used to reproduce video contents recorded on a DVD. When the user presses the DVD start button 15B, an application program for reproducing video contents is automatically activated.

The system configuration of the computer 10 will be explained with reference to FIG. 2.

As shown in FIG. 2, the computer 10 incorporates a CPU 111, north bridge 112, main memory 113, graphics controller 114, south bridge 119, BIOS-ROM 120, hard disk drive (HDD) 121, optical disk drive (ODD) 122, digital TV broadcasting tuner 123, embedded controller/keyboard controller (EC/KBC) 124, network controller 125, and the like.

The CPU 111 is a processor adopted to control operation of the computer 10. The CPU 111 executes an operating system (OS) and various application programs such as a video reproduction application program 201 that are loaded from the HDD 121 to the main memory 113.

The video reproduction application program 201 is software for decoding and reproducing compression encoded moving image data, and serves as a software decoder compatible to the H.264/AVC standard. The video reproduction application program 201 includes a function of decoding a moving image stream (e.g., a digital TV broadcast program received by the digital TV broadcasting tuner 123, or high-definition (HD) video contents read out from the ODD 122 compression encoded by an encoding scheme defined by the H.264/AVC standard.

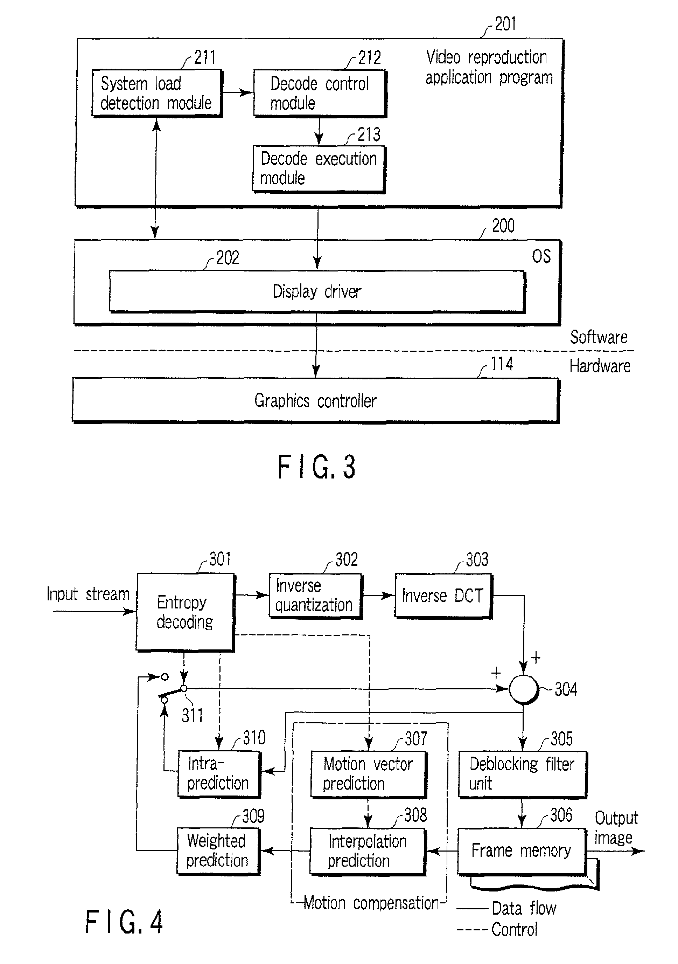

As shown in FIG. 3, the video reproduction application program 201 comprises a system load detection module 211, decode control module 212, and decode execution module 213.

The decode execution module 213 is a decoder which executes a decoding process defined by the H.264/AVC standard. The system load detection module 211 inquires the OS 200 about the presence of the load of the CPU 111, and obtains it. The decode control module 212 controls the content of the decoding process to be executed by the decode execution module 213 in accordance with the load of the CPU 111 which is detected by the system load detection module 211.

More specifically, when the load of the CPU 111 which is detected by the system load detection module 211 is smaller than a predetermined value, the decode control module 212 controls the content of the decoding process to be executed by the decode execution module 213 so that the CPU 111 executes the decoding process defined by the H.264/AVC standard. On the other hand, when the load of the CPU 111 is equal to or larger than the predetermined value, the decode control module 212 controls the content of the decoding process to be executed by the decode execution module 213 so that a part of the decoding process defined by the H.264/AVC standard is omitted.

Note that the moving image data decoded by the video reproduction application program 201 is sequentially written in a video memory 114A of the graphics controller 114 via a display driver 202. With this process, the decoded moving image data is displayed on the LCD 17. The display driver 202 is software for controlling the graphics controller 114.

The CPU 111 also executes a basic input output system (BIOS) stored in the BIOS-ROM 120. The BIOS is a program for controlling hardware.

The north bridge 112 is a bridge device that connects the local bus of the CPU 111 and the south bridge 119. The north bridge 112 also incorporates a memory controller which executes access control for the main memory 113. Additionally, the north bridge 112 includes a function of making a communication with the graphics controller 114 via an accelerated graphics port (AGP) bus or the like.

The graphics controller 114 is a display controller which controls the LCD 17 used as the display monitor of the computer 10. The graphics controller 114 generates a display signal to be supplied from image data in the video memory (VRAM) 114A to the LCD 17.

The south bridge 119 controls devices on an low pin count bus and peripheral component interconnect (PCI) bus. The south bridge 119 incorporates an integrated drive electronics (IDE) controller which controls the HDD 121. The south bridge 119 also includes a function of controlling the digital TV broadcasting tuner 123, and a function of executing access control for the BIOS-ROM 120.

The HDD 121 is a storage device which stores various kinds of software and data. The ODD 122 is a drive unit for driving a storage medium such as a DVD which stores video contents and the like. The digital TV broadcasting tuner 123 is a reception device which externally receives broadcast program data such as a digital TV broadcast program.

The EC/KBC 124 is a 1-chip microcomputer on which an embedded controller for power management and a keyboard controller that controls the keyboard (KB) 13 and touch pad 16 are integrated. The EC/KBC 124 includes a function of turning on/off the power supply of the computer 10 in response to a user's operation of the power button 14. The EC/KBC 124 can also turn on the power supply of the computer 10 in response to a user's operation of the TV start button 15A and DVD start button 15B. The network controller 125 is a communication device for making a communication with an external network such as the Internet.

Referring to FIG. 4, the functional arrangement of the software decoder implemented by the video reproduction application program 201 will be described below.

The decode execution module 213 of the video reproduction application program 201 is compatible to the H.264/AVC standard, and includes an entropy decoding unit 301, inverse quantization unit 302, inverse discrete cosine transform (DCT) unit 303, adder 304, deblocking filter unit 305, frame memory 306, motion vector prediction unit 307, interpolation prediction unit 308, weighted prediction unit 309, intra prediction unit 310, and mode switching unit 311 as shown in FIG. 4. The orthogonal transform of the H.264 codec has integer precision, and is different from conventional DCT. However, it is sill called "DCT" herein.

Each picture is encoded for each macro block of, e.g., 16 × 16 pixels. One of an intra-frame encoding mode (intra-encoding mode) and a motion compensation inter-frame prediction encoding mode (inter-encoding mode) is selected for each macro block.

In the motion compensated inter-frame prediction encoding mode, upon estimating the motion of a picture in accordance with the encoded picture, a motion compensated inter-frame prediction signal corresponding to the encoding target picture is generated for each predetermined shape unit. A prediction error signal obtained by subtracting the motion compensated inter-frame prediction signal from an encoding target picture is encoded by orthogonal transform (DCT), quantization, and entropy encoding. In the intra-encoding mode, a prediction signal is generated from the encoding target picture, and is encoded by orthogonal transform (DCT), quantization, and entropy encoding.

The codec compatible to the H.264/AVC standard uses the following techniques in order to further improve a compression ratio.
(1) Motion compensation of a pixel precision (1/4 pixel precision) higher than that of a conventional MPEG
(2) Intra-frame prediction for efficiently performing intra-frame encoding
(3) Deblocking filter for reducing block distortion
(4) Integer DCT for each block of 4 × 4 pixels
(5) Multireference frame capable of using a plurality of pictures at arbitrary positions, as reference pictures
(6) Weighted prediction

The operation of the software decoder will be described below with reference to FIG. 4.

A moving image stream compression-encoded in accordance with the H.264/AVC standard is input to the entropy decoding unit 301. The compression-encoded moving image stream includes motion vector information used in the motion compensated inter-frame prediction encoding (inter-prediction encoding) process, intra-frame prediction information used in the intra-frame prediction encoding (intra-prediction encoding) process, mode information indicating the prediction mode (inter-prediction encoding/intra-prediction encoding), and the like in addition to the encoded image information.

The decoding process is executed for each macro block of, e.g., 16 × 16 pixels. The entropy decoding unit 301 executes an entropy decoding process such as variable-length decoding for the moving image stream to separate a quantization DCT coefficient, motion vector information (motion vector difference information), intra-frame prediction information, and mode information from the moving image stream. In this case, for example, each macro block in the decoding target picture undergoes the entropy decoding process for each block of 4 × 4 (or 8 × 8) pixels to convert the block into the quantization DCT coefficient of 4 × 4 (or 8 × 8) pixels. Assume that each block has 4 × 4 pixels in the following description. The motion vector information is transmitted to the motion vector prediction unit 307. The intra-frame prediction information is transmitted to the intra-prediction unit 310. The mode information is transmitted to the mode switching unit 311.

The 4 × 4 quantization DCT coefficient of each decoding target block is converted into a 4 × 4 DCT coefficient (orthogonal conversion coefficient) by performing the inverse quantization process of the inverse quantization unit 302. The 4 × 4 DCT coefficient is converted from frequency information into a 4 × 4 pixel value by performing the inverse integral DCT (inverse orthogonal conversion) process of the inverse DCT unit 303. The 4 × 4 pixel value is a prediction error signal corresponding to the decoding target block. This prediction error signal is transmitted to the adder 304 to add the prediction signal (motion compensated inter-frame prediction signal or intra-frame prediction signal) corresponding to the decoding target block. Accordingly, the 4 × 4 pixel value corresponding to the decoding target block is decoded.

In the intra-prediction mode, the mode switching unit 311 selects the intra-prediction unit 310 to add the intra-frame prediction signal from the intra-prediction unit 310 to the prediction error signal. In the inter-prediction mode, the mode switching unit 311 selects the weighting prediction unit 309 to add, to the prediction error signal, the motion compensated inter-frame prediction signal obtained by the motion vector prediction unit 307, interpolation prediction unit 308, and weighting prediction unit 309.

As described above, a process of adding the prediction signal (motion compensated inter-frame prediction signal or intra-frame prediction signal) to the prediction error signal corresponding to the decoding target picture, and decoding the decoding target picture is executed for each predetermined block.

The frame memory 306 stores each decoded picture after the deblocking filter process of the deblocking filter unit 305. The deblocking filter unit 305 performs the deblocking filter process, for each block of 4 × 4 pixels, to reduce block noise for each decoded picture. This deblocking filter process prevents block distortion from occurring in a reference image and propagating to the decoding target image. The processing amount for the deblocking filter process is enormous, and reaches, e.g., 50% of the entire processing amount of the software decoder. The deblocking filter process is adaptively executed so that the more likely block distortion tends to occur, the stronger filtering is executed, and vice versa. The deblocking filter process is executed by a loop filtering process.

Each picture subjected to the deblocking filter process is then read out as an output image frame (or an output image field) from the frame memory 306. The frame memory 306 stores each picture (reference picture) to be used as the reference image for motion compensated inter-frame prediction, for a predetermined period of time. In the motion compensated inter-frame prediction encoding process of the H.264/AVC standard, a plurality of pictures can be used as the reference pictures. Hence, the frame memory 306 has a plurality of frame memory units for storing images of the plurality of pictures.

The motion vector prediction unit 307 generates the motion vector information based on the motion vector difference information corresponding to the decoding target block. The interpolation prediction unit 308 generates the motion compensated inter-frame prediction signal from the pixels of the integer precision and the prediction interpolation pixels of the 1/4 pixel precision in the reference picture based on the motion vector information corresponding to the decoding target block. In order to generate the prediction interpolation pixel of 1/4 pixel precision, a 1/2 image is generated by using the 6-tap filter (six inputs, one output), and the 2-tap filter is then used. Hence, a high-precision prediction interpolation process can be executed in consideration of a highfrequency component. However, motion compensation accordingly requires a large processing amount.

The weighting prediction unit 309 generates the weighted, motion compensated inter-frame prediction signal by multiplying the motion compensated inter-frame prediction signal by the weighting coefficient for each motion compensated block. Weighting prediction is a process of predicting the brightness of the decoding target picture. This weighting prediction process can improve the quality of an image whose brightness changes with the lapse of time, such as fade-in or fade-out. However, software accordingly requires a large processing amount.

The intra prediction unit 310 generates the intra-frame prediction signal of the decoding target block in the decoding target picture based on the decoding target picture itself. The intra prediction unit 310 executes the intra-picture prediction process in accordance with the above-described intra-frame prediction information to generate the intra-frame prediction signal based on the pixel value of another decoded block which is present in the same picture as the decoding target block and is adjacent to the decoding target block. This intra-frame prediction (intra-prediction) is a technique of improving a compression ratio by using the pixel correlation between the blocks. When using a block of, e.g., 16 × 16 pixels in the intra-frame prediction process, one of four prediction modes including vertical prediction (prediction mode 0), horizontal prediction (prediction mode 1), average value prediction (prediction mode 3), and plane prediction (prediction mode 4) is selected for each intra-frame prediction block in accordance with the intra-frame prediction information. The frequency of selecting plane prediction is lowest in all intra-frame prediction modes. However, the plane prediction process requires a largest processing amount in all intra-frame prediction modes.

In this embodiment, in view of the fact that a viewer hardly perceives degradation of a color difference signal in comparison with that of a luminance signal when the image quality degrades to same extent, when the computer 10 has a large load, all decoding processes (referred to as a normal decoding process hereinafter) including the deblocking filter process, and a specific decoding process, are selectively executed as shown in FIG. 4. The specific decoding process is implemented by skipping the deblocking filter process for the color difference signal being subjected to the deblocking filter process, from the normal decoding process.

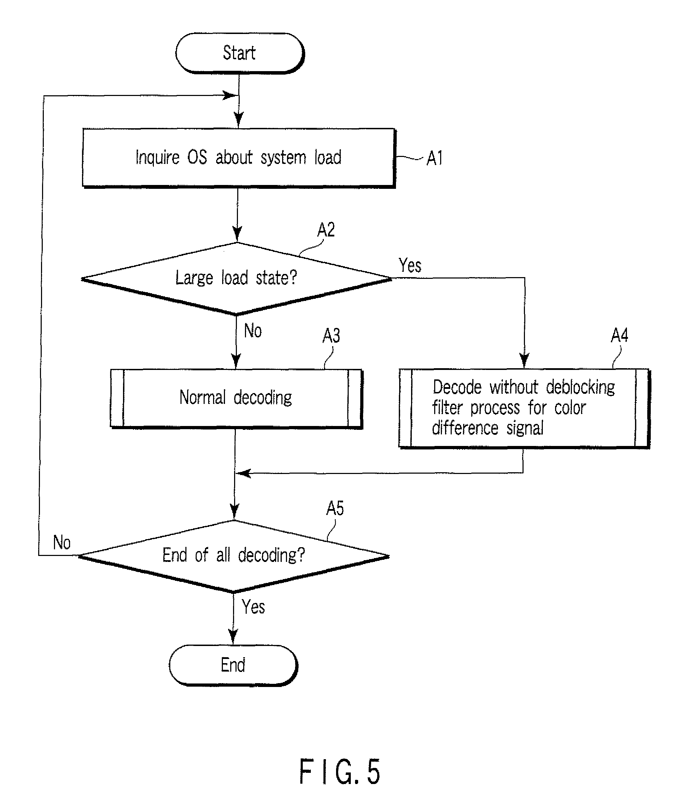

With reference to the flowchart shown in FIG. 5, the sequence of the decoding process executed by the video reproduction application program 201 will be described below.

During execution of the decoding process, the video reproduction application program 201 inquires the OS 200 about the system load (block A1). If the computer does not have a large load (NO in block A2), the video reproduction application program 201 selects and executes the above-described normal decoding process as the decoding process to be executed by the CPU 111 (block A3).

On the other hand, if the computer has a large load (YES in block A2), the video reproduction application program 201 selects and executes the above-described specific decoding process, i.e., the decoding process without the deblocking filter process for the color difference signal, as the decoding process to be executed by the CPU 111 (block A4). Upon omitting the deblocking filter process for the color difference signal, the processing amount necessary for decoding software for each picture can be largely decreased although an image having a block distortion may be output.

If the moving image stream has not been decoded (NO in block A5), blocks A1 to A4 are repeated. Upon compression of the decoding process (YES in block A5), this process ends.

As described above, the computer 10 according to this embodiment appropriately reduces the system load in order to decode the moving image stream.

### (Second Embodiment)

The second embodiment of the present invention will be described below.

In the first embodiment, the normal decoding process is executed when the load of the CPU 111 which is detected by the system load detection module 211 is smaller than a predetermined value, and a decoding process without a deblocking filter process for a color difference signal is executed when the load of the CPU 111 is equal to or larger than the predetermined value. As described above, the first embodiment has two control steps. In contrast to this, the second embodiment has three control steps based on the value of the load of the CPU 111, i.e., whether the load of the CPU 111 is equal to or larger than a predetermined first value, or is (smaller than the first value and) equal to or larger than the second value. More specifically, the computer controls the filter strength of the deblocking filter process to be small in addition to control in the first embodiment.

The filter strength is determined based on a boundary strength (bs) uniquely obtained from the attribute of the pixel to be subjected to filter process. The bs have values of 0, 1, 2, 3, and 4. If the bs value = 0, the filter process is not executed. If the bs value = 4, the strongest filter process is executed, thereby increasing a calculation amount accordingly. Hence, when the actual bs value = 1, 2, or 3, the filter process is executed as in the case of bs = 0 (that is, the filter process is omitted in effect). Only when the actual bs value = 4, the normal process is executed, thereby reducing the total calculation amount.

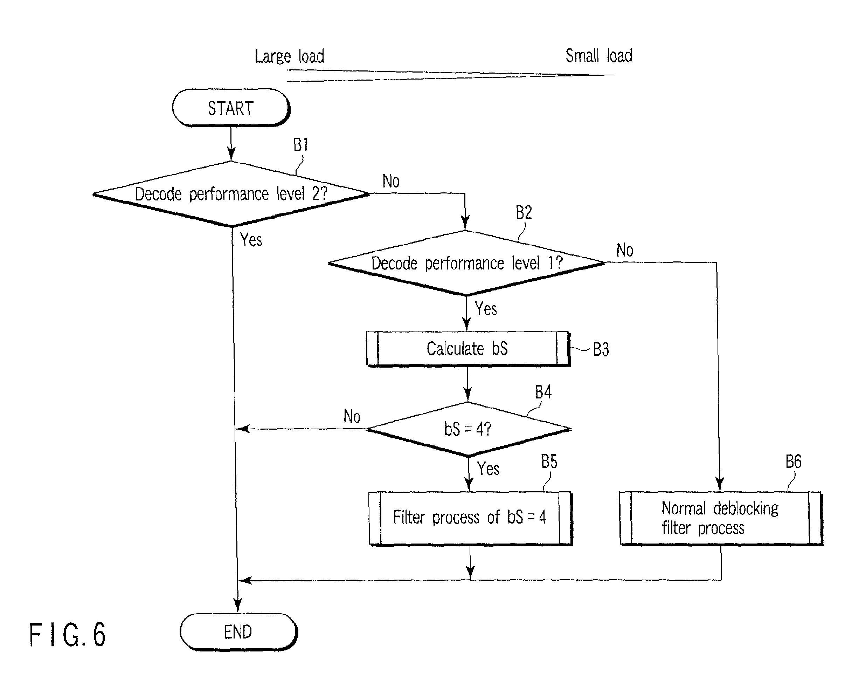

FIG. 6 is an exemplary flowchart showing the sequence of a decoding process executed by a video reproduction application program 201 according to the second embodiment.

When a system load acquired from an OS 200 is equal to or larger than the first value (when the performance level of decoding = 2) (YES in block B1), the video reproduction application program 201 unconditionally determines to omit a deblocking filter process for a color difference signal at this time.

When the system load is smaller than the first value (NO in block B1), and is equal to or larger than the second value (the performance level of decoding = 1) (YES in block B2), the video reproduction application program 201 then calculates a block boundary strength at a block boundary in a picture (block B3). If the block boundary strength value is not 4 (NO in block B4), the video reproduction application program 201 determines to skip the deblocking filter process for the color difference signal. On the other hand, if the block boundary strength value is 4 (YES in block B4), the video reproduction application program 201 determines to execute the filter process as in the case of bs = 4 in the picture (block B5). If the block boundary strength value is smaller than the second value (NO in block B2), the video reproduction application program 201 determines to execute a normal filter process (block B6) .

As described above, when the system load is equal to or larger than the largest first value, a computer 10 according to this embodiment omits the filter process without calculating the bs. When the system load is smaller than the first value, and is equal to or larger than the second value, the computer adaptively controls to omit the deblocking filter process for the color difference signal in accordance with the attribute (bs calculation result) in a picture.

Note that a computer program implements the above described decoding control process. Hence, the same effect can be easily implemented only by installing the computer program in a normal computer via a computer readable storage medium.

Additionally, a software decoder according to these embodiments can be applied not only to a personal computer but also a PDA, cell-phone, and the like.

## Claims

1. An information processing apparatus which decodes a compression encoded moving image stream, **characterized by** comprising:
a filter processing means (213) for executing a deblocking filter process in order to reduce block distortion for each decoded picture;
detection means (211) for detecting a load state of the information processing apparatus; and
control means (212) for causing the filter processing means to execute the deblocking filter process without a process for a color difference signal in accordance with the load state detected by the detection means.

2. The information processing apparatus according to claim 1, **characterized in that** the control means causes the filter processing means to execute the deblocking filter process without the process for the color difference signal at a block boundary of the block boundaries in each picture, where a block boundary strength value uniquely calculated from an attribute of each pixel is smaller than a predetermined reference value.

3. The information processing apparatus according to claim 2, **characterized in that** the control means causes the filter processing means to execute the deblocking filter process including a process of omitting the process for the color difference signal upon setting the block boundary strength at zero.

4. The information processing apparatus according to claim 1, **characterized in that** the control means omits the process for the color difference signal without calculating the block boundary strength at the block boundary in each picture when the load detected by the detection means is not smaller than a first value, and calculates the block boundary strength at the block boundary in each picture from the attribute of each pixel, and causes the filter processing means to execute the deblocking filter process including a process of omitting the process for the color difference signal at the block boundary where the block boundary strength value is smaller than the predetermined reference value when the load is smaller than the first value and not smaller than a second value.

5. A control method for an information processing apparatus which decodes a compression encoded moving image stream and includes filter processing means for executing a deblocking filter process in order to reduce block distortion for each decoded picture, **characterized by** comprising:
detecting (A1) a load state of the information processing apparatus; and
controlling (A4) the filter processing means to execute the deblocking filter process without a process for a color difference signal in accordance with the detected load state.

6. The control method according to claim 5, **characterized in that** the controlling causes the filter processing means to execute the deblocking filter process without the process for the color difference signal at a block boundary of the block boundaries in each picture, where a block boundary strength value uniquely calculated from an attribute of each pixel is smaller than a predetermined reference value.

7. The control method according to claim 6, **characterized in that** the controlling causes the filter processing means to execute the deblocking filter process including a process of omitting the process for the color difference signal upon setting the block boundary strength at zero.

8. The control method according to claim 5, **characterized in that** the controlling omits the process for the color difference signal without calculating the block boundary strength at the block boundary in each picture when the load detected by the detection means is not smaller than a first value, and calculates the block boundary strength at the block boundary in each picture from the attribute of each pixel, and causes the filter processing means to execute the deblocking filter process including a process of omitting the process for the color difference signal at the block boundary where the block boundary strength value is smaller than the predetermined reference value when the load is smaller than the first value and not smaller than a second value.

9. A program for causing a computer to execute a decode process of decoding a compression encoded moving image stream, **characterized in that**
the computer functions as
filter processing means (213) for executing a deblocking filter process in order to reduce block distortion for each decoded picture;
detection means (211) for detecting a load state of the information processing apparatus; and
control means (212) for causing the filter processing means to execute the deblocking filter process without a process for a color difference signal in accordance with the load state detected by the detection means.

10. The program according to claim 9, **characterized in that** the control means causes the filter processing means to execute the deblocking filter process without the process for the color difference signal at a block boundary of the block boundaries in each picture, where a block boundary strength value uniquely calculated from an attribute of each pixel is smaller than a predetermined reference value.

11. The program according to claim 9,
**characterized in that** the control means causes the filter processing means to execute the deblocking filter process including a process of omitting the process for the color difference signal upon setting the block boundary strength at zero.

12. The program according to claim 8, **characterized in that** the control means omits the process for the color difference signal without calculating the block boundary strength at the block boundary in each picture when the load detected by the detection means is not smaller than a first value, and calculates the block boundary strength at the block boundary in each picture from the attribute of each pixel, and causes the filter processing means to execute the deblocking filter process including a process of omitting the process for the color difference signal at the block boundary where the block boundary strength value is smaller than the predetermined reference value when the load is smaller than the first value and not smaller than a second value.
